# EUROPEAN PATENT SPECIFICATION

(11) **EP 2 576 120 B1**
(45) Date of publication and mention of the grant of the patent: **20.02.2019**
(21) Application number: 11786186.4
(22) Date of filing: 17.05.2011
(51) Int. Cl.: B23K 9/12

(54) **METHOD AND ARRANGEMENT IN A GAS SHIELDED ARC WELDING DEVICE SUCH AS MIC/MAG-WELDER**
VERFAHREN UND ANORDNUNG IN EINER GASABGESCHIRMTEN LICHTBOGENSCHEISSVORRICHTUNG WIE EINER MIG-/MAG-SCHWEISSANLAGE
PROCÉDÉ ET AGENCEMENT METTANT EN OEUVRE UN DISPOSITIF DE SOUDAGE À L'ARC SOUS PROTECTION GAZEUSE, TEL QU'UN POSTE À SOUDER MIG/MAG

(30) Priority: 26.05.2010 FI 20105593
(43) Date of publication of application: 10.04.2013
(73) Proprietor: Kemppi Oy, 15800 Lahti (FI)
(72) Inventor: ANSAHARJU, Ville, FI-15270 Kukkila (FI); KUNNAS, Esa, FI-15810 Lahti (FI); DAHLSTRÖM, Tapani, FI-15140 Lahti (FI)
(74) Representative: Boco IP Oy Ab
(86) International application number: PCT/FI2011/050451
(87) International publication number: WO 2011/148042

(56) References cited:
- EP-A1- 0 607 819
- EP-B1- 1 140 410
- WO-A1-00/33999
- WO-A1-03/090966
- DE-C1- 4 204 661
- JP-A- 61 003 673
- JP-A- S63 199 078
- US-A1- 2008 142 493
- US-A9- 2008 290 079
- US-A9- 2008 290 079

## Description

### Background of the Invention

The object of the invention is a method according to the preamble of Claim 1 in a gas shielded arc welding device, such as a MIG/MAG-welder, for reducing the sticking of the wire electrode to the welding current tip of the welding gun, in connection with the termination of a welding step.
The object of the invention is also an arrangement according to the preamble of Claim 15 in a gas shielded arc welding device, such as a MIG/MAG-welder, for reducing the sticking of the wire electrode to the welding current tip of the welding gun, in connection with the termination of a welding step.
In a prior art MIG/MAG-welding event, an electric arc between a wire electrode, which is fed through a welding gun, and a work-piece is generated by means of an electric current supplied by a power source. The electric arc will melt the material to be welded and the wire electrode and fuse them, forming a molten weld pool. A wire feeding device continuously feeds the wire electrode through the welding gun during a welding job. A MIG/MAG-welder, as such in accordance with prior art, typically comprises a power source, a wire feeding device, an earth cable, a welding gun, possibly a liquid cooling device, and a shielding gas cylinder or a gas pipeline connection. The welding gun typically comprises a welding current tip, through which the wire electrode is guided, and in which the electric current, supplied by the power source, is conducted to the wire electrode.

The proper operation of the welding current tip is an important prerequisite for successful welding. Problems in the welding current tip are caused by the wire electrode getting completely or partly stuck to the inner surface of the welding current tip after the electric arc is extinguished. During welding, some melt will form (typically near the end of the welding current tip), to which the wire electrode might get stuck after termination of the welding. At the start of the following welding job, the stuck wire electrode causes a counterforce to the feeding of the wire and impedes the ignition of the electric arc and impairs the quality of the welding. In the beginning, no wire is being fed, and finally it springs loose and for a moment too much of it will be delivered. The wire might also get stuck, but later spring loose after the tip has cooled off. Then the tip as well as the wire might get damaged, which again impairs the next ignition.

There have been efforts to prevent the wire from getting stuck in the welding current tip, by selecting the material for the inner surface of the welding current tip, i.a. various copper alloys, or by controlling the current-voltage values of the power source at the termination of welding in such a way, that the wire wouldn't get stuck in the welding current tip.

The publication EP 1 140 410 teaches a method for reducing the sticking of a wire electrode in a welding current tip of a welding gun in connection with termination of gas shielded arc welding. In this prior art solution, the welding current is decreased during a period of time of a length of 0.5 - 100 milliseconds in such a way, that the power produced by the electric arc between the wire electrode and the welding current tip is so small, that the melted mass produced between the wire electrode and the welding current tip is unable to stick the wire electrode to the welding current tip when the welding current finally is switched off.
The publication US 2009/1017971 teaches a method for cleaning the welding current tip of a welding gun. In the method, the wire electrode is moved, at least once, backwards in the direction of the wire bobbin, until the end of the wire electrode is inside by an amount of at least the length defined by the welding current tip, after which the wire electrode is moved forwards anew.

WO 03/090966 A1, basis for the preamble of claims 1 and 13, describes A method for executing a GMAW-welding process is described, using a welding torch with a tube-shaped contact electrode which is provided with an auxiliary electrode. Initially, it is assured that the end of a welding wire is inside the tube-shaped electrode. Then, a preheating arc is ignited between the auxiliary electrode and a workpiece concerned, while a current source is operated in a TIG-mode. Sometime after ignition of the preheating arc, wire transport of the welding wire is set in motion, and the current source is operated in a GMAW-mode in this case, such that a welding arc is going to burn between the end of the welding wire and the workpiece (W) concerned. After the welding process has ended, the end of the welding wire is withdrawn to within the contact electrode.
DE 4204661 C1 describes that to avoid slag coating of the wire electrode end for reliable re-ignition of the arc, the wire feed is reversed at relatively high speed of approximately 5 m/min to withdraw the wire into the welding nozzle at the end of the weld, while the welding current is adjusted to max. value for a duration of 100 milliseconds max. at the start of feed reversal immediately prior to switching off.
WO 00/33999A1 relates to a method for preventing the welding electrode sticking in the contact nozzle and a welding power source of the inverter type for MIG/MAG with these characteristics. A short fading of the current takes place before the welding current is switched off.

### Brief Description of the Invention

The aim of the invention is to achieve an implementation, which is much simpler, more reliable and more economical than the earlier solutions.
The aim of the invention is achieved by the method, according to the independent Claim 1, in a gas shielded arc welding device, such as a MIG/MAG-welder, for reducing the sticking of the wire electrode in the welding current tip of a welding gun in connection with the termination of a welding step.
The object of the invention is also an arrangement, according to the independent Claim 13, in a gas shielded arc welding device, such as a MIG/MAG-welder, for reducing the sticking of the wire electrode in the welding current tip of a welding gun in connection with the termination of a welding step.

The preferred embodiments of the invention are presented in the dependent patent claims.

In connection with the termination of a welding step, a step, known per se, of switching off the welding current is performed, in which step the welding current is switched off and, as a consequence of the switching off of the welding current, the electric arc is extinguished and a step, known per se, of stopping the feeding of the wire is performed, in which the wire feeding is stopped. In the invention, after the step of switching off the welding current and the step of stopping the feeding of the wire, a step of post stop feeding is performed, wherein the wire electrode is moved in relation to the welding current tip of the welding torch.

By twitching the wire electrode a tiny distance forwards or backwards after the welding current tip has cooled off a little, i.e by performing said step of post stop feeding, the wire electrode is loosened from the welding current tip, or it might not even stick to the welding current tip. Typically, the step of post stop feeding can be performed in a time interval of about 100 - 200 milliseconds from the moment the electric arc is extinguished. Should the time be shorter, the welding current tip would still be so hot, that the wire electrode gets stuck, and should the time be longer, the step of post stop feeding will not necessarily be able to loosen the wire electrode, in addition to which the probability of damage to the welding current tip will increase.

### List of Figures

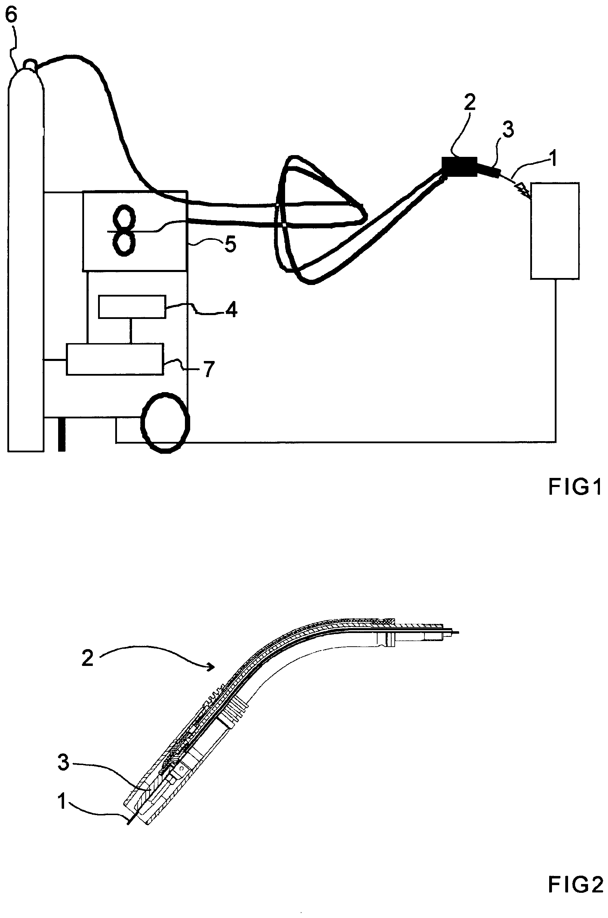

Below, some preferred embodiments of the invention are presented in greater detail, with reference to the accompanying figures, of which
Fig. 1 shows a welding device,
Fig. 2 shows a section view of a welding gun,
Fig. 3 shows the wire feeding velocity and the welding current as a function of time in connection with the termination of a welding step in a first preferred embodiment of the method and the arrangement according to the invention,
Fig. 4 shows the wire feeding velocity and the welding current as a function of time in connection with the termination of a welding step in a second preferred embodiment of the method and the arrangement according to the invention,
Fig. 5 shows the wire feeding velocity and the welding current as a function of time in connection with the termination of a welding step in a third preferred embodiment of the method and the arrangement according to the invention,
Fig. 6 shows the wire feeding velocity and the welding current as a function of time in connection with the termination of a welding step in a fourth preferred embodiment of the method and the arrangement according to the invention,
Fig. 7 shows the wire feeding velocity and the welding current as a function of time in connection with the termination of a welding step in a fifth preferred embodiment of the method and the arrangement according to the invention.

### Detailed Description of the Invention

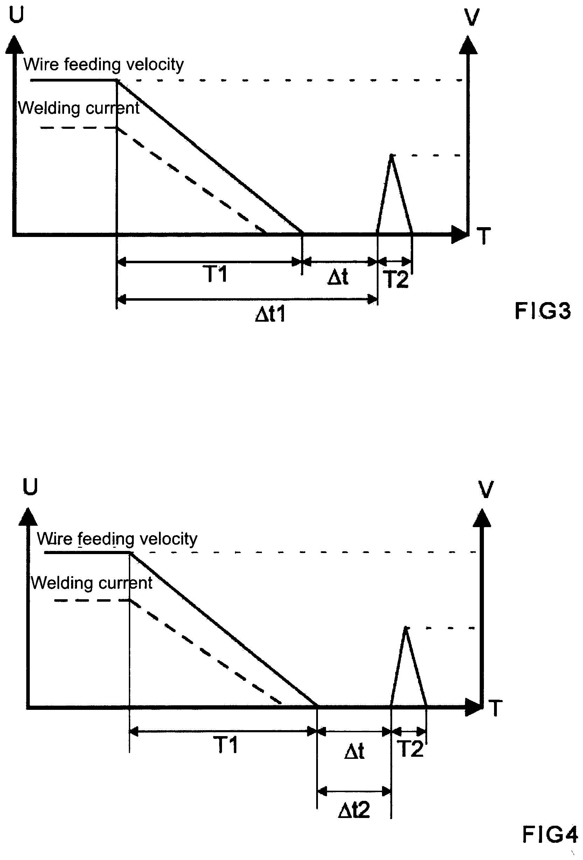

Primarily, the object of the invention is a method in a gas shielded arc welding device, such as a MIG/MAG-welder, for decreasing the sticking of the wire electrode 1 in the welding current tip 3 of the welding torch 2, in connection with termination of a welding step.
The method utilizes a gas shielded arc welding device, comprising a welding torch 2, a power source 4, wire feeding means 5, and a control means 7 for controlling at least the power source 4 and the wire feeding means 5. The gas shielded arc welding device can further comprise a shielding gas apparatus 6.
In connection with the termination of a welding step, a step of switching off the welding current is performed, wherein the welding current is being switched off and, as a consequence of switching off the welding current, the electric arc is extinguished, and a step of stopping the wire feeding is performed, wherein the wire feeding is being stopped.
After the step of switching off the welding current and the step of stopping the wire feeding, a step of post stop feeding is performed, wherein the wire electrode 1 is moved by means of the wire feeding means 5 in relation to the welding current tip 3 of the welding torch 2.
According to the present invention, the step of switching off the welding current comprises a step of attenuating the welding current, as shown in Figures 3 - 7, wherein the welding current U is continuously and/or gradually decreased to zero, and the step of stopping the wire feeding comprises a step of decelerating the wire feeding velocity, wherein the wire feeding velocity V is continuously and/or gradually decreased to zero. In the Figures 3 - 7, the time duration of the step of attenuating the welding current and the step of decelerating the wire feeding velocity is marked T1.

In a first preferred embodiment of the method, a step of post stop feeding is performed 80 milliseconds - 450 milliseconds after the initiation of the step of stopping the wire feeding, more preferably about 110 milliseconds after the initiation of the step of stopping the wire feeding. Fig. 3 shows this first preferred embodiment of the method. After the step of switching off the welding current and the step of stopping the wire feeding, there is a pause, marked Δt, after which pause the step of post stop feeding is performed, the duration of which is marked T2, and wherein the value of the welding current U is zero and wherein the wire electrode 1, by means of the wire feeding means 5, is being moved in relation to the welding current tip 3 of the welding torch 2. The time between the moment of initiating the step of stopping the wire feeding and the moment of initiating the step of post stop feeding is marked Δt1.

According to the present invention, a step of post stop feeding is performed 0 milliseconds - 450 milliseconds after the performing of the step of stopping the wire feeding, more preferably about 30 milliseconds after the performing of the step of stopping the wire feeding. Fig. 4 shows this second preferred embodiment of the method. After the step of switching off the welding current and the step of stopping the wire feeding, there is a pause, marked Δt, after which pause the step of post stop feeding is performed, the duration of which is marked T2, and wherein the value of the welding current U is zero and wherein the wire electrode 1, by means of the wire feeding means 5, is being moved in relation to the welding current tip 3 of the welding torch 2.

The time between the moment of completing the step of stopping the wire feeding and the moment of initiating the step of post stop feeding is marked Δt2.

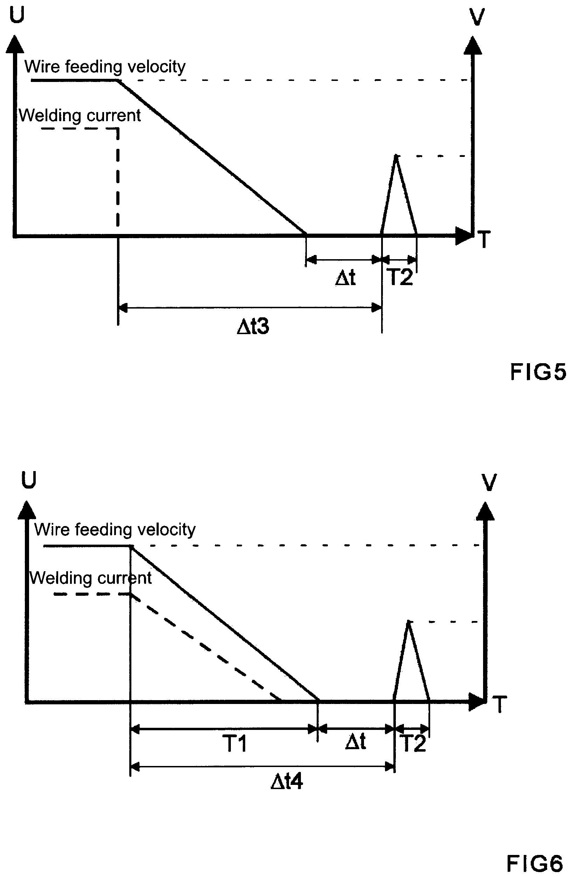

In a further preferred embodiment of the method, the magnitude of the welding current is measured, and a step of post stop feeding is performed 40 milliseconds - 450 milliseconds after the switching off of the welding current, more preferably about 150 milliseconds after the switching off of the welding current. Fig. 5 shows this third preferred embodiment of the method. After the step of stopping the wire feeding, there is a pause, marked Δt, and after which pause the step of post stop feeding is performed, the duration of which is marked T2, and wherein the value of the welding current U is zero and wherein the wire electrode 1, by means of the wire feeding means 5, is being moved in relation to the welding current tip 3 of the welding torch 2. The time between the moment of switching off of the welding current and the moment of initiating the step of post stop feeding is marked Δt3.

In a preferred embodiment of the method, a step of post stop feeding is performed 40 milliseconds - 450 milliseconds after the initiation of the step of switching off the welding current, preferably about 150 milliseconds after the initiation of the step of switching off the welding current. Fig. 6 shows this fourth preferred embodiment of the method. After the step of switching off the welding current and the step of stopping the wire feeding, there is a pause, marked Δt, and after which pause the step of post stop feeding is performed, the duration of which is marked T2, and wherein the value of the welding current U is zero and wherein the wire electrode 1, by means of the wire feeding means 5, is being moved in relation to the welding current tip 3 of the welding torch 2. The time between the moment of initiating the step of switching off the welding current and the moment of initiating the step of post stop feeding is marked Δt4.

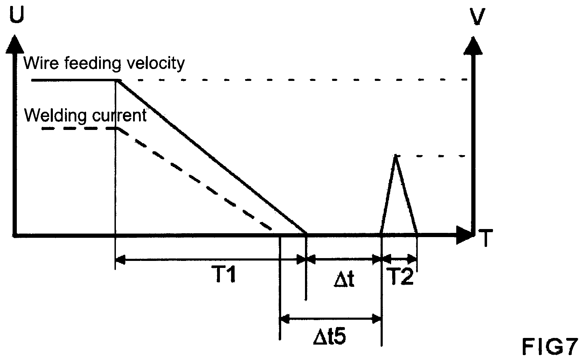

In a preferred embodiment of the method, a step of post stop feeding is performed 40 milliseconds - 450 milliseconds after the performing of the step of switching off the welding current, preferably about 150 milliseconds after the performing of the step of switching off the welding current. Fig. 7 shows this fifth preferred embodiment of the method. After the step of switching off the welding current and the step of stopping the wire feeding, there is a pause, marked Δt, and after which pause the step of post stop feeding is performed, the duration of which is marked T2, and wherein the value of the welding current U is zero and wherein the wire electrode 1, by means of the wire feeding means 5, is being moved in relation to the welding current tip 3 of the welding torch 2. The time between the finishing moment of the step of switching off the welding current and the moment of initiating the step of post stop feeding is marked Δt5.
The duration of the step of post stop feeding is preferably, but not necessarily, about 10 milliseconds - about 500 milliseconds. In the Figures 3 - 7, the duration of the step of post stop feeding is marked T2.
During the step of post stop feeding, the wire electrode 1 is being moved, preferably, but not necessarily, by about 0.5 - about 3.0 mm (about 0,020 in - about 0,118 in), preferably by about 1.0 - about 2.5 mm (about 0,039 in - about 0,098 in), more preferably by about 1.5 - about 2.0 mm (about 0,059 in - about 0,079 in), in relation to the welding current tip 3 of the welding torch 2.

According to the present invention, the wire electrode 1 is being moved in relation to the welding current tip 3 of the welding torch 2 in the feed direction of the wire electrode 1.
Preferably, but not necessarily, the wire feeding means 5 feed the wire electrode 1 at full effect, at least during part of the step of post stop feeding. For example, there is the possibility, that the step of post stop feeding comprises a first step, wherein the wire electrode 1 is being fed at full effect by means of the wire feeding means 5, and following the first step, a second step, wherein the wire feeding is being decelerated to zero.
Preferably, but not necessarily, in the method, a command for performing the step of post stop feeding is being issued by means of the control means 7.
Preferably, but not necessarily, in the method, a secondary step of post stop feeding is performed after the step of post stop feeding, in which secondary step of post stop feeding, the wire electrode 1 is being moved in relation to the welding current tip 3 of the welding torch 2. In case, in the method, a secondary step of post stop feeding is performed after the step of post stop feeding, preferably, but not necessarily, a command for performing the secondary step of post stop feeding is being issued by means of the control means 7.

The object of the invention is also an arrangement in a gas shielded arc welding device, such as a MIG/MAG-welder, for reducing the sticking of the wire electrode 1 to the welding current tip 3 of the welding torch 2 in connection with the termination of a welding step.
The gas shielded arc welding device comprises a welding torch 2, a power source 4, wire feeding means 5, and a control means 7 for controlling at least the power source 4 and the wire feeding means 5. The gas shielded arc welding device can further comprise a shielding gas apparatus 6.
In connection with the termination of a welding step, the control means 7 is adapted to issuing a command for performing a step of switching off the welding current, wherein the welding current is being switched off and, as a consequence of switching off the welding current, the electric arc is extinguished, and a command for performing a step of stopping the wire feeding, wherein the wire feeding is being stopped.
The wire feeding means 5 are adapted to performing, after the step of switching off of the welding current and the step of stopping the wire feeding, a step of post stop feeding, wherein the wire electrode 1 is being moved in relation to the welding current tip 3 of the welding torch 2.
According to the present invention for the arrangement, the control means 7 is adapted to issuing a command for performing such a step of switching off the welding current, wherein the welding current is continuously and/or gradually decreased to zero, and a command for performing such a step of stopping the wire feeding, which comprises a step of decelerating the wire feeding, wherein the wire feeding velocity is continuously or gradually decreased to zero.
In a first preferred embodiment of the arrangement, the control means 7 is adapted to issuing a command for performing a step of post stop feeding 80 milliseconds - 450 milliseconds after the initiation of the step of decelerating the wire feeding, more preferably about 110 milliseconds after the initiation of the step of stopping the wire feeding of the wire feeding velocity. Fig. 3 shows a diagram presentation of the operation of the first preferred embodiment of such an arrangement.

According to the present invention for the arrangement, the control means 7 is adapted to issuing a command for performing a step of post stop feeding 0 milliseconds - 450 milliseconds after the performing of the step of stopping the wire feeding, more preferably about 30 milliseconds after the performing of the step of stopping the wire feeding. Fig. 4 shows a diagram presentation of the operation of the second preferred embodiment of such an arrangement.

In a further preferred embodiment of the arrangement, the gas shielded arc welding device comprises welding current measuring means (not shown in the figures) for measuring the magnitude of the welding current, the welding current magnitude measuring means being functionally connected to the control means 7. In this preferred embodiment, the control means 7 is adapted to issuing a command for performing a step of post stop feeding 40 milliseconds - 450 milliseconds after the switching off of the welding current, more preferably about 150 milliseconds after the switching off of the welding current. Fig. 5 shows a diagram presentation of the operation of the third preferred embodiment of such an arrangement.

In a preferred embodiment of the arrangement, the control means 7 is adapted to issuing a command for performing a step of post stop feeding 40 milliseconds - 450 milliseconds after the initiation of the step of switching off the welding current, preferably about 150 milliseconds after the initiation of the step of switching off the welding current. Fig. 6 shows a diagram presentation of the operation of the fourth preferred embodiment of such an arrangement.

In a preferred embodiment of the arrangement, the control means 7 is adapted to issuing a command for performing a step of post stop feeding 40 milliseconds - 450 milliseconds after the performing of the step of switching off the welding current, preferably about 150 milliseconds after the performing of the step of switching off the welding current. Fig. 7 shows a diagram presentation of the operation of the fifth preferred embodiment of such an arrangement.
In one preferred embodiment of the arrangement, the control means 7 is adapted to issuing a command for performing a step of post stop feeding, performed by the wire feeding means 5, the duration of said step of post stop feeding being about 10 milliseconds - about 500 milliseconds.
In one preferred embodiment of the arrangement, the wire feeding means 5 are adapted to moving the wire electrode 1 during a step of post stop feeding by about 0.5 - about 3.0 mm (about 0,020 in - about 0,118 in), preferably by about 1.0 - about 2.5 mm (about 0,039 in - about 0,098 in), more preferably by about 1.5 - about 2.0 mm (about 0,059 in - about 0,079 in), in relation to the welding current tip 3 of the welding torch 2.

According to the invention for the arrangement, the wire feeding means 5 are adapted to moving the wire electrode 1 during a step of post stop feeding, in relation to the welding current tip 3 of the welding torch 2 in the feed direction of the wire electrode 1.
In one preferred embodiment of the arrangement, the wire feeding means 5 are adapted to feeding the wire electrode 1 at full effect, at least during part of the step of post stop feeding.
In one preferred embodiment of the arrangement, the step of post stop feeding comprises a first step, wherein the wire feeding means 5 are adapted to feeding the wire electrode at full effect by means of the wire feeding means 5, and following the first step, a second step, wherein the wire feeding means 5 are adapted to decelerating the wire feeding velocity to zero.
In one preferred embodiment of the arrangement, the wire feeding means 5 are adapted to performing a secondary step of post stop feeding after the performing of the step of post stop feeding, in which secondary step of post stop feeding, the wire feeding means 5 are adapted to moving the wire electrode 1 in relation to the welding current tip 3 of the welding torch 2.
In one preferred embodiment of the arrangement, the control means 7 is adapted to issuing a command for performing a secondary step of post stop feeding, wherein the wire electrode 1 is moved in relation to the welding current tip 3 of the welding gun, said secondary step of post stop feeding being performed after the performing of the step of post stop feeding.

It is obvious to a person skilled in the art, that the basic idea of the invention, as technology development occurs, can be implemented in a multitude of different ways. Thus, the invention and its embodiments are not limited to the examples presented above, but rather, they can vary within the scope of the patent claims.

### Text in the Figures:

**Fig. 1**
**Fig. 2**
**Fig. 3**
   Wire feeding velocity
   Welding current
**Fig. 4**
   Wire feeding velocity
   Welding current
**Fig. 5**
   Wire feeding velocity
   Welding current
**Fig. 6**
   Wire feeding velocity
   Welding current
**Fig. 7**
   Wire feeding velocity
   Welding current

## Claims

1. A method in a gas shielded arc welding device, such as a MIG/MAG-welder, for reducing sticking of the wire electrode (1) to the welding current tip (3) of the welding torch (2) in connection with the termination of a welding step,
wherein the method utilizes a gas shielded arc welding device comprising a welding torch (2), a power source (4), wire feeding means (5), and a control means (7) for controlling at least the power source (4) and the wire feeding means (5), and
wherein, in connection with the termination of a welding step, a step of switching off the welding current is performed, wherein the welding current is switched off and the electric arc, as a consequence of the welding current being switched off, is extinguished, and a step of stopping the wire feeding is performed, wherein the wire feeding is stopped, and
**characterised in that**, after the step of switching off the welding current and the step of stopping the wire feeding are performed, a step of post stop feeding is performed, wherein the wire electrode (1), by means of the wire feeding means (5), is moved in the feed direction of the wire electrode (1) in relation to the welding current tip (3) of the welding torch (2)
wherein the step of post stop feeding is performed 0 milliseconds - 450 milliseconds after the performing of the step of stopping the wire feeding, more preferably about 30 milliseconds after the performing of the step of stopping the wire feeding, and
that the step of switching off the welding current comprises a step of attenuating the welding current, wherein the welding current U is continuously and/or gradually decreased to zero, and the step of stopping the wire feeding comprises a step of decelerating the wire feeding velocity, wherein the wire feeding velocity V is continuously and/or gradually decreased to zero.

2. Method according to Claim 1, **characterized in, that** the step of post stop feeding is performed 80 milliseconds - 450 milliseconds after the initiation of the step of stopping the wire feeding of the wire feeding, more preferably about 110 milliseconds after the initiation of the step of stopping the wire feeding.

3. Method according to any one of the Claims 1 - 2, **characterized in,**
**that**, in the method, the magnitude of the welding current is being measured, and
**that** the step of post stop feeding is performed 40 milliseconds - 450 milliseconds after the switching off of the welding current, more preferably about 150 milliseconds after the switching off of the welding current.

4. Method according to any one of the Claims 1 - 3, **characterized in, that** the step of post stop feeding is performed 40 milliseconds - 450 milliseconds after the initiation of the step of switching off the welding current, more preferably about 150 milliseconds after the initiation of the step of switching off the welding current.

5. Method according to any one of the Claims 1 - 4, **characterized in, that** the step of post stop feeding is performed 40 milliseconds - 450 milliseconds after the performing of the step of switching off the welding current, more preferably about 150 milliseconds after the performing of the step of switching off the welding current.

6. Method according to any one of the Claims 1 - 5, **characterized in, that** the duration of the step of post stop feeding is about 10 milliseconds - about 500 milliseconds.

7. Method according to any one of the Claims 1 - 6, **characterized in, that**, during the step of post stop feeding, the wire electrode (1) is being moved by about 0.5 - about 3.0 mm (about 0,020 in - about 0,118 in), preferably by about 1.0 - about 2.5 mm (about 0,039 in - about 0,098 in), more preferably by about 1.5 - about 2.0 mm (about 0,059 in - about 0,079 in), in relation to the welding current tip (3) of the welding torch (2).

8. Method according to any one of the Claims 1 - 7, **characterized in, that** the wire feeding means (5) feed the wire electrode (1) at full effect, at least during part of the step of post stop feeding.

9. Method according to any one of the Claims 1 - 8, **characterized in, that** the step of post stop feeding comprises a first step, wherein the wire electrode (1) is being fed at full effect by means of the wire feeding means (5) and, following the first step, a second step, wherein the wire feeding velocity is decelerated to zero.

10. Method according to any one of the Claims 1 - 9, **characterized in, that** a command for performing the step of post stop feeding is being issued by means of the control means (7).

11. Method according to any one of the Claims 1 - 10, **characterized in, that**
a secondary step of post stop feeding is performed after the performing of the step of post stop feeding, and
in which secondary step of post stop feeding, the wire electrode (1) is being moved in relation to the welding current tip (3) of the welding torch (2).

12. Method according to Claim 11, **characterized in, that** a command for performing the secondary step of post stop feeding is being issued by means of the control means (7).

13. An arrangement in a gas shielded arc welding device, such as a MIG/MAG-welder, for reducing the sticking of the wire electrode (1) to the welding current tip (3) of the welding torch (2) in connection with the termination of a welding step,
wherein the gas shielded arc welding device comprises a welding torch (2), a power source (4), wire feeding means (5), and
**characterised by** a control means (7) for controlling at least the power source (4) and the wire feeding means (5),
wherein, in connection with the termination of a welding step, the control means (7) is adapted to issuing a command for performing a step of switching off the welding current, wherein the welding current is switched off and the electric arc, as a consequence of the welding current being switched off, is extinguished, and for performing a step of stopping the wire feeding, wherein the wire feeding is stopped, and
wherein the wire feeding means (5) are adapted to performing under the control of the control means (7), after the step of switching off the welding current and the step of stopping the wire feeding, a step of post stop feeding, wherein the wire electrode (1) is moved in the feed direction of the wire electrode (1) in relation to the welding current tip (3) of the welding torch (2),
wherein the control means (7) is adapted to issuing a command for performing the step of post stop feeding 0 milliseconds - 450 milliseconds after the performing of the step of stopping the wire feeding, more preferably about 30 milliseconds after the performing of the step of stopping the wire feeding, and
wherein
the step of switching off the welding current comprises a step of attenuating the welding current, wherein the welding current U is continuously and/or gradually decreased to zero, and the step of stopping the wire feeding comprises a step of decelerating the wire feeding velocity, wherein the wire feeding velocity V is continuously and/or gradually decreased to zero.

14. Arrangement according to Claim 13, **characterized in, that** the control means (7) is adapted to issuing a command for performing the step of post stop feeding 80 milliseconds - 450 milliseconds after the initiation of the step of stopping the wire feeding of the wire feeding, more preferably about 110 milliseconds after the initiation of the step of stopping the wire feeding.

15. Arrangement according to any one of the Claims 13 - 14, **characterized in,**
**that** the gas shielded arc welding device comprises means for measuring the magnitude of the welding current, said means for measuring the magnitude of the welding current being operationally connected to the control means (7), and
**that** the control means (7) is adapted to issuing a command for performing the step of post stop feeding 40 milliseconds - 450 milliseconds after the switching off of the welding current, more preferably about 150 milliseconds after the switching off of the welding current.

16. Arrangement according to any one of the Claims 13 - 15, **characterized in, that** the control means (7) is adapted to issuing a command for performing the step of post stop feeding 40 milliseconds - 450 milliseconds after the initiation of the step of switching off the welding current, more preferably about 150 milliseconds after the initiation of the step of switching off the welding current.

17. Arrangement according to any one of the Claims 13 - 16, **characterized in, that** the control means (7) is adapted to issuing a command for performing the step of post stop feeding 40 milliseconds - 450 milliseconds after the performing of the step of switching off the welding current, more preferably about 150 milliseconds after the performing of the step of switching off the welding current.

18. Arrangement according to any one of the Claims 13 - 17, **characterized in, that** the duration of the step of post stop feeding, performed by the wire feeding means (5), is about 10 milliseconds - about 500 milliseconds.

19. Arrangement according to any one of the Claims 13 - 18, **characterized in, that** the wire feeding means (5) are adapted to moving the wire electrode (1) during the step of post stop feeding by about 0.5 - about 3.0 mm (about 0,020 in - about 0,118 in), preferably by about 1.0 - about 2.5 mm (about 0,039 in - about 0,098 in), more preferably by about 1.5 - about 2.0 mm (about 0,059 in - about 0,079 in), in relation to the welding current tip (3) of the welding torch (2) .

20. Arrangement according to any one of the Claims 13 - 19, **characterized in, that** the wire feeding means (5) are adapted to feeding the wire electrode (1) at full effect, at least during part of the step of post stop feeding.

21. Arrangement according to any one of the Claims 13 - 20, **characterized in, that** the step of post stop feeding comprises a first step, wherein the wire feeding means (5) are adapted to feeding the wire electrode (1) at full effect by means of the wire feeding means (5) and, following the first step, a second step, wherein the wire feeding means (5) are adapted to decelerating the wire feeding velocity to zero.

22. Arrangement according to any one of the Claims 13 - 21, **characterized in,**
**that** the wire feeding means (5) are adapted to performing a secondary step of post stop feeding after the performing of the step of post stop feeding, and
**that** the wire feeding means (5) are adapted to moving the wire electrode (1), in the secondary step of post stop feeding, in relation to the welding current tip (3) of the welding torch (2).

23. Arrangement according to Claim 22, **characterized in, that** the control means (7) is adapted to issuing a command for performing the secondary step of post stop feeding, wherein the wire electrode (1) is moved in relation to the welding current tip (3) of the welding gun, said secondary step of post stop feeding being performed after the performing of the step of post stop feeding.

## Patentansprüche

1. Verfahren in einer Schutzgas-Lichtbogenschweißvorrichtung, wie einer MIG/MAG-Schweißmaschine, zur Reduzierung des Festklebens der Drahtelektrode (1) an der Schweißstromspitze (3) des Schweißbrenners (2) im Zusammenhang mit der Beendigung eines Schweißschritts,
wobei das Verfahren eine Schutzgas-Lichtbogenschweißvorrichtung verwendet, die einen Schweißbrenner (2), eine Stromquelle (4), Drahtvorschubmittel (5) und ein Steuermittel (7) zum Steuern mindestens der Stromquelle (4) und der Drahtvorschubmittel (5) umfasst, und
wobei im Zusammenhang mit der Beendigung eines Schweißschritts ein Schritt zum Abschalten des Schweißstroms ausgeführt wird, bei welchem der Schweißstrom abgeschaltet wird und der Lichtbogen infolge des Abschaltens des Schweißstroms gelöscht wird, und ein Schritt zum Anhalten des Drahtvorschubs ausgeführt wird, bei welchem der Drahtvorschub angehalten wird, und
**dadurch gekennzeichnet, dass** nach Ausführung des Schritts des Abschaltens des Schweißstroms und des Schritts des Anhaltens des Drahtvorschubs ein Schritt des Nachlaufvorschubs ausgeführt wird, bei welchem die Drahtelektrode (1) über die Drahtvorschubmittel (5) in Vorschubrichtung der Drahtelektrode (1) im Verhältnis zur Schweißstromspitze (3) des Schweißbrenners (2) bewegt wird,
wobei der Schritt des Nachlaufvorschubs 0 Millisekunden bis 450 Millisekunden nach der Ausführung des Schritts des Anhaltens des Drahtvorschubs, bevorzugter etwa 30 Millisekunden nach der Ausführung des Schritts des Anhaltens des Drahtvorschubs ausgeführt wird, und
dass der Schritt des Abschaltens des Schweißstroms einen Schritt zur Verminderung des Schweißstroms umfasst, bei welchem der Schweißstrom U kontinuierlich und/oder allmählich auf null abgesenkt wird, und der Schritt des Anhaltens des Drahtvorschubs einen Schritt zur Verlangsamung der Drahtvorschubgeschwindigkeit umfasst, bei welchem die Drahtvorschubgeschwindigkeit V kontinuierlich und/oder allmählich auf null abgesenkt wird.

2. Verfahren nach Anspruch 1, **dadurch gekennzeichnet, dass** der Schritt des Nachlaufvorschubs 80 Millisekunden bis 450 Millisekunden nach der Einleitung des Schritts des Anhaltens des Drahtvorschubs des Drahtvorschubs, bevorzugter etwa 110 Millisekunden nach der Einleitung des Schritts des Anhaltens des Drahtvorschubs ausgeführt wird.

3. Verfahren nach einem der Ansprüche 1 bis 2, **dadurch gekennzeichnet,**
**dass** im Verfahren die Größenordnung des Schweißstroms gemessen wird und
**dass** der Schritt des Nachlaufvorschubs 40 Millisekunden bis 450 Millisekunden nach dem Abschalten des Schweißstroms, bevorzugter etwa 150 Millisekunden nach dem Abschalten des Schweißstroms, ausgeführt wird.

4. Verfahren nach einem der Ansprüche 1 bis 3, **dadurch gekennzeichnet, dass** der Schritt des Nachlaufvorschubs 40 Millisekunden bis 450 Millisekunden nach der Einleitung des Schritts des Abschaltens des Schweißstroms, bevorzugter etwa 150 Millisekunden nach der Einleitung des Schritts des Abschaltens des Schweißstroms, ausgeführt wird.

5. Verfahren nach einem der Ansprüche 1 bis 4, **dadurch gekennzeichnet, dass** der Schritt des Nachlaufvorschubs 40 Millisekunden bis 450 Millisekunden nach der Durchführung des Schritts des Abschaltens des Schweißstroms, bevorzugter etwa 150 Millisekunden nach der Durchführung des Schritts des Abschaltens des Schweißstroms, ausgeführt wird.

6. Verfahren nach einem der Ansprüche 1 bis 5, **dadurch gekennzeichnet, dass** die Dauer des Schritts des Nachlaufvorschubs etwa 10 Millisekunden bis etwa 500 Millisekunden beträgt.

7. Verfahren nach einem der Ansprüche 1 bis 6, **dadurch gekennzeichnet, dass** während des Schritts des Nachlaufvorschubs die Drahtelektrode (1) um etwa 0,5 bis etwa 3,0 mm (etwa 0,020 Zoll bis etwa 0,118 Zoll), bevorzugt um etwa 1,0 bis etwa 2,5 mm (etwa 0,039 Zoll bis etwa 0,098 Zoll), bevorzugter um etwa 1,5 bis etwa 2,0 mm (etwa 0,059 Zoll bis etwa 0,079 Zoll) im Verhältnis zur Schweißstromspitze (3) des Schweißbrenners (2) bewegt wird.

8. Verfahren nach einem der Ansprüche 1 bis 7, **dadurch gekennzeichnet, dass** die Drahtvorschubmittel (5) die Drahtelektrode (1), zumindest während eines Teils des Schritts des Nachlaufvorschubs, mit voller Wirkung zustellen.

9. Verfahren nach einem der Ansprüche 1 bis 8, **dadurch gekennzeichnet, dass** der Schritt des Nachlaufvorschubs einen ersten Schritt, bei welchem die Drahtelektrode (1) über die Drahtvorschubmittel (5) mit voller Wirkung zugestellt wird, und, im Anschluss an den ersten Schritt, einen zweiten Schritt, bei welchem die Drahtvorschubgeschwindigkeit bis auf null verlangsamt wird, umfasst.

10. Verfahren nach einem der Ansprüche 1 bis 9, **dadurch gekennzeichnet, dass** über das Steuermittel (7) ein Befehl zur Ausführung des Schritts des Nachlaufvorschubs ausgegeben wird.

11. Verfahren nach einem der Ansprüche 1 bis 10, **dadurch gekennzeichnet, dass**
nach der Ausführung des Schritts des Nachlaufvorschubs ein sekundärer Schritt des Nachlaufvorschubs ausgeführt wird und
wobei in dem sekundären Schritt des Nachlaufvorschubs die Drahtelektrode (1) im Verhältnis zur Schweißstromspitze (3) des Schweißbrenners (2) bewegt wird.

12. Verfahren nach Anspruch 11, **dadurch gekennzeichnet, dass** über das Steuermittel (7) ein Befehl zur Ausführung des sekundären Schritts des Nachlaufvorschubs ausgegeben wird.

13. Anordnung in einer Schutzgas-Lichtbogenschweißvorrichtung, wie einer MIG/MAG-Schweißmaschine, zur Reduzierung des Festklebens der Drahtelektrode (1) an der Schweißstromspitze (3) des Schweißbrenners (2) im Zusammenhang mit der Beendigung eines Schweißschritts,
wobei die Schutzgas-Lichtbogenschweißvorrichtung einen Schweißbrenner (2), eine Stromquelle (4), Drahtvorschubmittel (5) umfasst und
**gekennzeichnet durch** ein Steuermittel (7) zum Steuern mindestens der Stromquelle (4) und der Drahtvorschubmittel (5),
wobei das Steuermittel (7), im Zusammenhang mit der Beendigung eines Schweißschritts, eingerichtet ist zum Ausgeben eines Befehls zur Ausführung eines Schritts zum Abschalten des Schweißstroms, bei welchem der Schweißstrom abgeschaltet wird und der Lichtbogen infolge des Abschaltens des Schweißstroms gelöscht wird, und zum Ausführen eines Schritts zum Anhalten des Drahtvorschubs, bei welchem der Drahtvorschub angehalten wird, und
wobei die Drahtvorschubmittel (5) dazu eingerichtet sind, im Rahmen der Steuerung des Steuermittels (7) nach dem Schritt des Abschaltens des Schweißstroms und dem Schritt des Anhaltens des Drahtvorschubs einen Schritt des Nachlaufvorschubs auszuführen, bei welchem die Drahtelektrode (1) in Vorschubrichtung der Drahtelektrode (1) im Verhältnis zur Schweißstromspitze (3) des Schweißbrenners (2) bewegt wird,
wobei das Steuermittel (7) ausgelegt ist zum Ausgeben eines Befehls zum Ausführen des Schritts des Nachlaufvorschubs 0 Millisekunden bis 450 Millisekunden nach Ausführung des Schritts des Anhaltens des Drahtvorschubs, bevorzugter etwa 30 Millisekunden nach der Ausführung des Schritts des Anhaltens des Drahtvorschubs, und
wobei der Schritt des Abschaltens des Schweißstroms einen Schritt zur Verminderung des Schweißstroms umfasst, bei welchem der Schweißstrom U kontinuierlich und/oder allmählich auf null abgesenkt wird, und der Schritt des Anhaltens des Drahtvorschubs einen Schritt zur Verlangsamung der Drahtvorschubgeschwindigkeit umfasst, bei welchem die Schweißstromgeschwindigkeit V kontinuierlich und/oder allmählich auf null abgesenkt wird.

14. Anordnung nach Anspruch 13, **dadurch gekennzeichnet, dass** das Steuermittel (7) eingerichtet ist zum Ausgeben eines Befehls zum Ausführen des Schritts des Nachlaufvorschubs 80 Millisekunden bis 450 Millisekunden nach der Einleitung des Schritts des Anhaltens des Drahtvorschubs des Drahtvorschubs, bevorzugter etwa 110 Millisekunden nach der Einleitung des Schritts des Anhaltens des Drahtvorschubs.

15. Anordnung nach einem der Ansprüche 13 bis 14, **dadurch gekennzeichnet,**
**dass** die Schutzgas-Lichtbogenschweißvorrichtung Mittel zur Messung der Größenordnung des Schweißstroms umfasst, wobei die Mittel zur Messung der Größenordnung des Schweißstroms mit dem Steuermittel (7) betriebswirksam verbunden sind, und
**dass** das Steuermittel (7) eingerichtet ist zum Ausgeben eines Befehls zum Ausführen des Schritts des Nachlaufvorschubs 40 Millisekunden bis 450 Millisekunden nach dem Abschalten des Schweißstroms, bevorzugter etwa 150 Millisekunden nach dem Abschalten des Schweißstroms.

16. Anordnung nach einem der Ansprüche 13 bis 15, **dadurch gekennzeichnet, dass** das Steuermittel (7) eingerichtet ist zum Ausgeben eines Befehls zum Ausführen des Schritts des Nachlaufvorschubs 40 Millisekunden bis 450 Millisekunden nach der Einleitung des Schritts des Abschaltens des Schweißstroms, bevorzugter etwa 150 Millisekunden nach der Einleitung des Schritts des Abschaltens des Schweißstroms.

17. Anordnung nach einem der Ansprüche 13 bis 16, **dadurch gekennzeichnet, dass** das Steuermittel (7) eingerichtet ist zum Ausgeben eines Befehls zum Ausführen des Schritts des Nachlaufvorschubs 40 Millisekunden bis 450 Millisekunden nach der Ausführung des Schritts des Abschaltens des Schweißstroms, bevorzugter etwa 150 Millisekunden nach der Ausführung des Schritts des Abschaltens des Schweißstroms.

18. Anordnung nach einem der Ansprüche 13 bis 17, **dadurch gekennzeichnet, dass** die Dauer des durch die Drahtvorschubmittel (5) ausgeführten Schritts des Nachlaufvorschubs etwa 10 Millisekunden bis etwa 500 Millisekunden beträgt.

19. Anordnung nach einem der Ansprüche 13 bis 18, **dadurch gekennzeichnet, dass** die Drahtvorschubmittel (5) dazu eingerichtet sind, die Drahtelektrode (1) während des Schritts des Nachlaufvorschubs um etwa 0,5 bis etwa 3,0 mm (etwa 0,020 Zoll bis etwa 0,118 Zoll), bevorzugt um etwa 1,0 bis etwa 2,5 mm (etwa 0,039 Zoll bis etwa 0,098 Zoll), bevorzugter um etwa 1,5 bis etwa 2,0 mm (etwa 0,059 Zoll bis etwa 0,079 Zoll) im Verhältnis zur Schweißstromspitze (3) des Schweißbrenners (2) zu bewegen.

20. Anordnung nach einem der Ansprüche 13 bis 19, **dadurch gekennzeichnet, dass** die Drahtvorschubmittel (5) dazu eingerichtet sind, die Drahtelektrode (1), zumindest während eines Teils des Schritts des Nachlaufvorschubs, mit voller Wirkung zustellen.

21. Anordnung nach einem der Ansprüche 13 bis 20, **dadurch gekennzeichnet, dass** der Schritt des Nachlaufvorschubs einen ersten Schritt, bei welchem die Drahtvorschubmittel (5) dazu eingerichtet sind, die Drahtelektrode (1) über die Drahtvorschubmittel (5) mit voller Wirkung zustellen, und, im Anschluss an den ersten Schritt, einen zweiten Schritt, bei welchem die Drahtvorschubmittel (5) dazu eingerichtet sind, die Drahtvorschubgeschwindigkeit auf null zu verlangsamen, umfasst.

22. Anordnung nach einem der Ansprüche 13 bis 21, **dadurch gekennzeichnet,**
**dass** die Drahtvorschubmittel (5) dazu eingerichtet sind, nach der Ausführung des Schritts des Nachlaufvorschubs einen sekundären Schritt des Nachlaufvorschubs auszuführen, und
**dass** die Drahtvorschubmittel (5) dazu eingerichtet sind, im sekundären Schritt des Nachlaufvorschubs die Drahtelektrode (1) im Verhältnis zur Schweißstromspitze (3) des Schweißbrenners (2) zu bewegen.

23. Anordnung nach Anspruch 22, **dadurch gekennzeichnet, dass** das Steuermittel (7) dazu eingerichtet ist, einen Befehl zur Ausführung des sekundären Schritts des Nachlaufvorschubs auszugeben, bei welchem die Drahtelektrode (1) im Verhältnis zur Schweißstromspitze (3) der Schweißpistole bewegt wird, wobei der sekundäre Schritt des Nachlaufvorschubs nach der Ausführung des Schritts des Nachlaufvorschubs ausgeführt wird.

## Revendications

1. Procédé dans un dispositif de soudage à l'arc sous protection gazeuse, tel qu'une soudeuse MIG/MAG, pour réduire l'adhérence du fil-électrode (1) au bec de soudage (3) de la torche de soudage (2) en liaison avec l'achèvement d'une étape de soudage,
dans lequel le procédé utilise un dispositif de soudage à l'arc sous protection gazeuse comprenant une torche de soudage (2), une source d'alimentation (4), des moyens d'avancement de fil (5) et un moyen de commande (7) pour commander au moins la source d'alimentation (4) et les moyens d'avancement de fil (5), et
dans lequel, en liaison avec l'achèvement d'une étape de soudage, une étape consistant à couper le courant de soudage est réalisée, dans laquelle le courant de soudage est coupé et l'arc électrique s'éteint en conséquence de la coupure du courant de soudage, et une étape consistant à arrêter l'avancement du fil est réalisée, dans laquelle l'avancement du fil est arrêté, et
**caractérisé en ce que**, après la réalisation de l'étape de coupure du courant de soudage et de l'étape d'arrêt de l'avancement du fil, une étape d'avancement après arrêt est réalisée dans laquelle le fil-électrode (1) est déplacé au moyen des moyens d'avancement de fil (5) dans le sens d'avance du fil-électrode (1) par rapport au bec de soudage (3) de la torche de soudage (2),
ladite étape d'avancement après arrêt étant réalisée 0 millisecondes à 450 millisecondes après la réalisation de l'étape d'arrêt de l'avancement du fil, plus préférablement environ 30 millisecondes après la réalisation de l'étape d'arrêt de l'avancement du fil et
que l'étape de coupure du courant de soudage comprend une étape consistant à atténuer le courant de soudage dans laquelle le courant de soudage U est réduit en continu et/ou graduellement à zéro et que l'étape d'arrêt de l'avancement du fil comprend une étape consistant à ralentir la vitesse d'avance du fil dans laquelle la vitesse d'avance du fil V est ralentie en continu et/ou graduellement à zéro.

2. Procédé selon la revendication 1, **caractérisé en ce que** l'étape d'avancement après arrêt est réalisée 80 millisecondes à 450 millisecondes après l'initiation de l'étape d'arrêt de l'avancement du fil de l'avancement du fil, plus préférablement environ 110 millisecondes après l'initiation de l'étape d'arrêt de l'avancement du fil.

3. Procédé selon l'une des revendications 1 à 2, **caractérisé en ce**
**que**, dans le procédé, l'ordre de grandeur du courant de soudage est mesuré et
**que** l'étape d'avancement après arrêt est réalisée 40 millisecondes à 450 millisecondes après la coupure du courant de soudage, plus préférablement environ 150 millisecondes après la coupure du courant de soudage.

4. Procédé selon l'une des revendications 1 à 3, **caractérisé en ce que** l'étape d'avancement après arrêt est réalisée 40 millisecondes à 450 millisecondes après l'initiation de l'étape de coupure du courant de soudage, plus préférablement environ 150 millisecondes après l'initiation de l'étape de coupure du courant de soudage.

5. Procédé selon l'une des revendications 1 à 4, **caractérisé en ce que** l'étape d'avancement après arrêt est réalisée 40 millisecondes à 450 millisecondes après la réalisation de l'étape de coupure du courant de soudage, plus préférablement environ 150 millisecondes après la réalisation de l'étape de coupure du courant de soudage.

6. Procédé selon l'une des revendications 1 à 5, **caractérisé en ce que** la durée de l'étape d'avancement après arrêt est de environ 10 millisecondes à environ 500 millisecondes.

7. Procédé selon l'une des revendications 1 à 6, **caractérisé en ce que**, pendant l'étape d'avancement après arrêt, le fil-électrode (1) est déplace d'environ 0,5 à environ 3,0 mm (d'environ 0,020 pouces à environ 0,118 pouces), préférablement d'environ 1,0 à environ 2,5 mm (d'environ 0,039 pouces à environ 0,098 pouces), plus préférablement d'environ 1,5 à environ 2,0 mm (d'environ 0,059 pouces à environ 0,079 pouces) par rapport au bec de soudage (3) de la torche de soudage (2).

8. Procédé selon l'une des revendications 1 à 7, **caractérisé en ce que** les moyens d'avancement de fil (5) font avancer le fil-électrode (1) à plein effet, au moins pendant une partie de l'étape d'avancement après arrêt.

9. Procédé selon l'une des revendications 1 à 8, **caractérisé en ce que** l'étape d'avancement après arrêt comprend une première étape dans laquelle le fil-électrode (1) avance à plein effet au moyen des moyens d'avancement de fil (5) et, après la première étape, une deuxième étape dans laquelle la vitesse d'avance du fil est ralentie à zéro.

10. Procédé selon l'une des revendications 1 à 9, **caractérisé en ce qu'**une commande pour la réalisation de l'étape d'avancement après arrêt est émise au moyen du moyen de commande (7).

11. Procédé selon l'une des revendications 1 à 10, **caractérisé en ce**
**qu'**une étape secondaire d'avancement après arrêt est réalisée après la réalisation de l'étape d'avancement après arrêt, et
**que**, dans ladite étape secondaire d'avancement après arrêt, le fil-électrode (1) est déplacé par rapport au bec de soudage (3) de la torche de soudage (2).

12. Procédé selon la revendication 11, **caractérisé en ce qu'**une commande pour la réalisation de l'étape secondaire d'avancement après arrêt est émise au moyen du moyen de commande (7).

13. Agencement dans un dispositif de soudage à l'arc sous protection gazeuse, tel qu'une soudeuse MIG/MAG, pour réduire l'adhérence du fil-électrode (1) au bec de soudage (3) de la torche de soudage (2) en liaison avec l'achèvement d'une étape de soudage,
dans lequel le dispositif de soudage à l'arc sous protection gazeuse comprend une torche de soudage (2), une source d'alimentation (4), des moyens d'avancement de fil (5) et
**caractérisé par** un moyen de commande (7) pour commander au moins la source d'alimentation (4) et les moyens d'avancement de fil (5),
ledit moyen de commande (7) étant adapté pour émettre, en liaison avec l'achèvement d'une étape, une commande pour réaliser une étape consistant à couper le courant de soudage, dans laquelle le courant de soudage est coupé et l'arc électrique s'éteint en conséquence de la coupure du courant de soudage, et pour réaliser une étape consistant à arrêter l'avancement du fil, dans laquelle l'avancement du fil est arrêté, et
lesdits moyens d'avancement de fil (5) étant adaptés pour réaliser, sous le contrôle du moyen de commande (7), après l'étape de coupure du courant de soudage et l'étape d'arrêt de l'avancement du fil, une étape d'avancement après arrêt, dans laquelle le fil-électrode (1) est déplacé dans le sens d'avance du fil-électrode (1) par rapport au bec de soudage (3) de la torche de soudage (2),
ledit moyen de commande (7) étant adapté pour émettre une commande pour réaliser l'étape d'avancement après arrêt 0 millisecondes à 450 millisecondes après la réalisation de l'étape d'arrêt de l'avancement du fil, plus préférablement environ 30 millisecondes après la réalisation de l'étape d'arrêt de l'avancement du fil, et
ladite étape de coupure du courant de soudage comprenant une étape consistant à atténuer le courant de soudage dans laquelle le courant de soudage U est réduit en continu et/ou graduellement à zéro et ladite étape d'arrêt de l'avancement du fil comprenant une étape consistant à ralentir la vitesse d'avance du fil dans laquelle la vitesse d'avance du fil V est ralentie en continu et/ou graduellement à zéro.

14. Agencement selon la revendication 13, **caractérisé en ce que** le moyen de commande (7) est adapté pour émettre une commande pour réaliser l'étape d'avancement après arrêt 80 millisecondes à 450 millisecondes après l'initiation de l'étape d'arrêt de l'avancement du fil de l'avancement du fil, plus préférablement environ 110 millisecondes après l'initiation de l'étape d'arrêt de l'avancement du fil.

15. Agencement selon l'une des revendications 13 à 14, **caractérisé en ce**
**que** le dispositif de soudage à l'arc sous protection gazeuse comprend des moyens pour mesurer l'ordre de grandeur du courant de soudage, lesdits moyens de mesure de l'ordre de grandeur du courant de soudage étant opérationnellement reliés au moyen de commande (7), et
**que** le moyen de commande (7) est adapté pour émettre une commande pour réaliser l'étape d'avancement après arrêt 40 millisecondes à 450 millisecondes après la coupure du courant de soudage, plus préférablement environ 150 millisecondes après la coupure du courant de soudage.

16. Agencement selon l'une des revendications 13 à 15, **caractérisé en ce que** le moyen de commande (7) est adapté pour émettre une commande pour réaliser l'étape d'avancement après arrêt 40 millisecondes à 450 millisecondes après l'initiation de l'étape de coupure du courant de soudage, plus préférablement environ 150 millisecondes après l'initiation de l'étape de coupure du courant de soudage.

17. Agencement selon l'une des revendications 13 à 16, **caractérisé en ce que** le moyen de commande (7) est adapté pour émettre une commande pour réaliser l'étape d'avancement après arrêt 40 millisecondes à 450 millisecondes après la réalisation de l'étape de coupure du courant de soudage, plus préférablement environ 150 millisecondes après la réalisation de l'étape de coupure du courant de soudage.

18. Agencement selon l'une des revendications 13 à 17, **caractérisé en ce que** la durée de l'étape d'avancement après arrêt réalisée par les moyens d'avancement de fil (5) est de environ 10 millisecondes à environ 500 millisecondes.

19. Agencement selon l'une des revendications 13 à 18, **caractérisé en ce que** les moyens d'avancement de fil (5) sont adaptés pour déplacer, pendant l'étape d'avancement après arrêt, le fil-électrode (1) d'environ 0,5 à environ 3,0 mm (d'environ 0,020 pouces à environ 0,118 pouces), préférablement d'environ 1,0 à environ 2,5 mm (d'environ 0,039 pouces à environ 0,098 pouces), plus préférablement d'environ 1,5 à environ 2,0 mm (d'environ 0,059 pouces à environ 0,079 pouces) par rapport au bec de soudage (3) de la torche de soudage (2).

20. Agencement selon l'une des revendications 13 à 19, **caractérisé en ce que** les moyens d'avancement de fil (5) sont adaptés pour faire avancer le fil-électrode (1) à plein effet, au moins pendant une partie de l'étape d'avancement après arrêt.

21. Agencement selon l'une des revendications 13 à 20, **caractérisé en ce que** l'étape d'avancement après arrêt comprend une première étape dans laquelle les moyens d'avancement de fil (5) sont adaptés pour faire avancer le fil-électrode (1) à plein effet au moyen des moyens d'avancement de fil (5), et, après la première étape, une deuxième étape dans laquelle les moyens d'avancement de fil (5) sont adaptés pour ralentir la vitesse d'avance du fil à zéro.

22. Agencement selon l'une des revendications 13 à 21, **caractérisé en ce**
**que** les moyens d'avancement de fil (5) sont adaptés pour réaliser, après la réalisation d'une étape d'avancement après arrêt, une étape secondaire d'avancement après arrêt et
**que** les moyens d'avancement de fil (5) sont adaptés pour déplacer le fil-électrode (1) par rapport au bec de soudage (3) de la torche de soudage (2) dans l'étape secondaire d'avancement après arrêt.

23. Agencement selon la revendication 22, **caractérisé en ce que** le moyen de commande (7) est adapté pour émettre une commande pour réaliser l'étape secondaire d'avancement après arrêt dans laquelle le fil-électrode (1) est déplacé par rapport au bec de soudage (3) du pistolet de soudage, ladite étape secondaire d'avancement après arrêt étant réalisée après la réalisation de l'étape d'avancement après arrêt.
